# EUROPEAN PATENT APPLICATION

(11) **EP 4 194 253 A1**
(43) Date of publication of application: **14.06.2023**
(21) Application number: 22199071.6
(22) Date of filing: 30.09.2022
(51) Int. Cl.: B60L 53/14, B60L 53/18, B60L 53/30

(54) **ARM FOR SUPPORTING A CHARGING CABLE OF AN ELECTRIC VEHICLE CHARGING STATION**

(30) Priority: 07.12.2021 CH 0706702021
(71) Applicant: Evtec AG, 6012 Kriens-Obernau (CH)
(72) Inventor: KRAMIS, Markus, 6020 Emmenbrücke (CH); BUCHER, Roland, 6280 Hochdorf (CH)
(74) Representative: M. Zardi & Co S.A.

(57) **Abstract**

It is disclosed an arm (1) for an electric vehicle charging station (20) including -coupling means (2) for coupling the arm (1) to the charging station (20); -supporting means (3) for supporting part (30) of a charging cable (31) at a portion (4) of the arm (1), wherein the coupling means (3) are arranged so as the portion (4) of the arm (1) is movable between a position (A) close to the charging station (20) and a position (B) distanced therefrom; -spring means (5) adapted for recalling the arm (1) from the position (B) distanced to the position (A) close to the charging station (20). A first end (1a) of the arm (1) is adapted to be hinged at the charging station (20) together with a pulley (6); -the spring means (5) include a spring (8) arranged between the first end (1a) and a second end (1b) of the arm (1), and a cable (7) wound around the pulley (6), the cable (7) being adapted to be fixed, at a first end (7a), to the charging station (20), and at a second end (7b), to an end (8a) of the spring (8) arranged towards the first end (1a) of the arm; wherein, during use, the spring (8) is loaded and the cable (7) is unwounded from the pulley (6) moving the portion (4) of the arm (1) towards the position (B) distanced from the charging station, and the cable (7) is wounded by leaving the spring (8) to unload.

## Description

### Field of application

The present invention relates to an arm for supporting a charging cable of an electric vehicle charging station.

In particular, the present invention concerns an arm of the type cited above including means for coupling the arm to the charging station and means for supporting part of the charging cable on the arm. The arm is movable between a position close to the charging station, for instance adhered thereto, and a position distanced therefrom, where an end of the arm projects from the charging station.

The present invention also relates to an electric vehicle charging station including the arm.

### Prior art

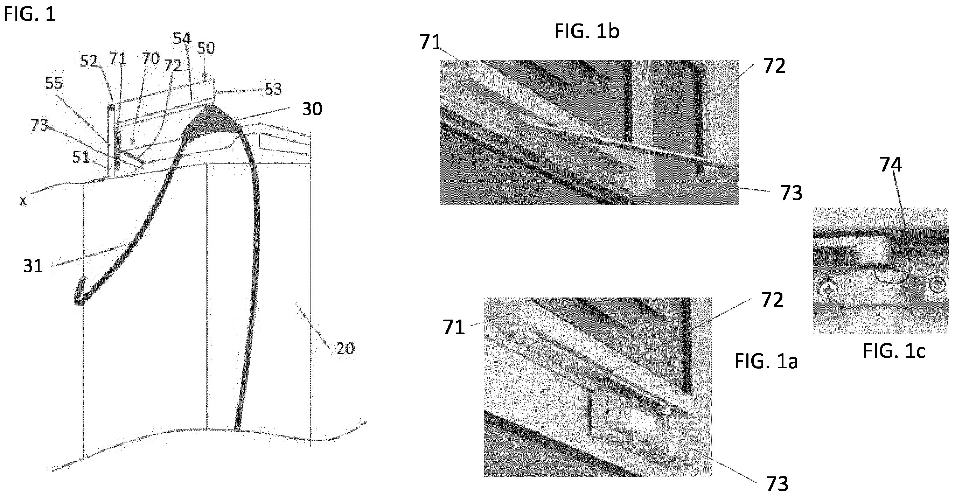

Arms for supporting a charging cable of an electric vehicle charging station are known in the art. Figure 1 represents for instance a known arm 50. The arm 50 has a first end 51 attached to the charging station 20 by means of a hinge, and therefore rotatable on an axis x of the hinge. Another end 53 of the arm supports a portion 30 of the charging cable 31. An articulated joint 52 connects a portion 54 of the arm 50 including the second end 53 and a portion 55 of the arm 50 including the first end 52. A driving mechanism 70 control movements of the arm from a position close to the charging station 20, for instance adhered thereto, and a position distanced therefrom, where the second end of the arm 50 projects from the charging station 20. Figure 1 represents the arm 50 in the position distanced from the charging station 20.

A driving mechanism 70 is also represented in figure 1a and 1b in two different phases of usage. The driving mechanism 70 includes a guide 71 attached to the arm 50, a driver block 73 attached to the charging station and a bar 72 connecting the guide 71 with the driver block 73. The driver block servs to recall the arm 50 to the charging station, when it is distanced from the charging. Speed and force of recall is adjustable.

In particular, a first end of the bar 72 is attached to the guide 71 and is adapted to move along the guide 71. A second end of the bar 71 is attached to the driver block 73 (see for instance fig. 1c), by coupling means 74 rotating with respect to the second end. The driver block 73 controls the speed of rotation of the coupling means 74, and therefore also the speed of rotation of the second end 74 and indirectly also the speed of the arm 50 (portion 55 to which the guide 51 is attached) with respect to the charging station 20.

The known arm, however, is not adapted to stay for long time outdoor since subject to noticeable deterioration due to atmospheric condition such as humidity, high or low temperatures and changes thereof, rain, snow or ice and dust. The arm, and in particular the driving mechanism, the guide, and couplings parts with the bar are not suitable to resist for long time and has to be substituted or frequently maintained. Otherwise, the movement of the arm is compromised. For instance, it has been experienced that the arm is not more recalled from the position distanced from the charging station, where it is brought by the user at the time of recharging the vehicle. Moreover, it may happen that the arm remains blocked to the charging station or, even if not blocked, its movement towards a position of usage for recharging the electric vehicle is not sufficiently fluid are free.

In an attempt to react to the temperature changes, manual adjustments have to be carried out, in order to set a speed/force depending on the temperature, but such adjustment are made by trials, involves undue burdens for the operators and may be insufficient to provide an optimal usage on 24h, for instance due to sudden temperature changes between daytime and night time.

The problem at the base of the invention is that of providing an arm which is adapted for supporting a charging cable of an electric charging vehicle provided with means suitable to recall the arm and the charging cable efficiently, so as the arm is less influenced by climate conditions, by the need of replacement of parts and maintenance with respect to known arms, with a same speed and force independently from temperature, preventing blocks of the arm at the charging station or reduction of the fluidity of the movement of the arm between a position close to the charging station and a position distanced therefrom, water proof, resistant to humidity, high or low temperatures and changes thereof, rain, snow or ice and dust, substantially reducing the drawback that currently affects the arms of the prior art.

### Summary of the invention

The idea of solution at the base of the present invention is to provide an arm for supporting a charging cable for an electric vehicle charging station, wherein the arm embeds the means for recalling the arm towards the charging stations, therefore preventing exposure to the environment of parts which, according to the prior art, are arranged between the arm and the charging station. The means for recalling are spring means. A spring is loaded or unloaded in a direction corresponding to the extension direction of the arm. The spring has a first end movable in the extension direction of the arm and a second end fixed on the arm. A cable, wound around a pulley, has a first end adapted to be fixed to charging station and a second end fixed to the first (the movable one) end of the cable. When mounted to the charging station, the pulley, which is at a first end of the arm rotatable mounted at the charging station, is adapted to rotate and to retrieves the cable or release it. The cable is retrieved when the arm is rotated in one direction and is released when the arm is rotated in the opposite direction. The spring is unloaded when the cable is retrieved, and loaded when the cable is released. After being loaded, the spring may recall the arm to the charging station, by rotating it or the axis of rotation of the pulley.

Based on the idea of solution given above, the technical problem is solved by an arm for supporting a charging cable of an electric vehicle charging station including
- coupling means for coupling the arm to the charging station;
- supporting means for supporting part the charging cable on a portion of the arm, preferably at a second end of the arm, wherein the coupling means are arranged so as the portion (i.e. the second end) of the arm is movable between a position A close to the charging station and a position B distanced therefrom;
- spring means adapted for recalling the arm from the position distanced to the position close to the charging station;
   characterized by the fact that
- a first end of the arm is adapted to be hinged at the charging station together with a pulley;
- the spring means include a spring arranged between the first end and a second end of the arm, and a cable wound around the pulley, the cable being adapted to be fixed, at a first end, to the charging station, and at a second end, to an end of the spring arranged towards the first end of the arm.

During use, the spring is unloaded and the cable wounded on the pulley moving the portion of the arm towards the position closed, and the cable is unwounded and the spring loaded bringing the arm to the position distanced from the charging station.

Preferably, the spring is a gas spring and the end of the spring arranged towards the first end of the arm is the head of a piston of the spring gas.

In an embodiment, a second end of the gas spring is fixed at the second end of the arm.

The coupling means, in an embodiment, includes a pivot adapted to be hinged at a plate on the charging station and at a plate of the first end of the arm, wherein the portion of the arm in use moves on a circular path C having center at the pivot.

For instance, but not exclusively, the cable may be a rope or a steel cable.

The technical problem mentioned above is also solved by a charging station including an arm of the type disclosed above.

Advantageously, the charging cable weight is held by the arm. Therefore, the force for the user to pull the cable is less than in a charging station not provided with an arm.

Moreover, due to arrangement of the spring means, the force by means of which the arm is recalled towards the charging station is uniform over the full angle where the arm is allowed to move. Moreover, the spring means are not subject to meaningful deterioration. The spring, for instance the gas spring, is embedded inside the arm, enclosed or hidden in a protecting case thereof.

A faster, more fluid and completely autonomous retraction of the charging cable along the full path from the position distanced from the charging station to the position closed thereto is achieved.

The (gas) spring and all other components of the arm are temperature resistant and outdoor proof. The components are waterproof, resistant to humidity, high or low temperatures and changes thereof, rain, snow or ice and dust.

Further features and advantages of the arm and the charging station according to the present invention are disclosed in an embodiment thereof given with reference to the enclosed drawings, given only for exemplificative and not limitative purpose.

The scope of protection of the invention is claimed in the claims.

### Brief description of the drawings

Figure 1 is an image of a known charging station including an arm for supporting a charging cable.
Figures 1a-1b are images of a driver block of the charging station of fig. 1.
Figure 1c is an image of a particular of the driver block of fig. 1a-ab.
Figure 2 is lateral view of an electric vehicle charging station including an arm for supporting a charging cable according to the present invention, during a phase of charging.
Figure 3 is perspective view of the electric vehicle charging station of figure 2.
Figure 3a is top view of the electric vehicle charging station of figure 2.
Figure 4 is perspective view of an electric vehicle charging station including the arm for supporting the charging cable according to the present invention, at rest.
Figure 4a is top view of the electric vehicle charging station of figure 4.
Figure 5 is another top view of the electric vehicle charging station of figure 2.
Figure 6 is a particular of the arm of figure 2-5.
Figure 6a is a particular of a cable of the arm of figure 2-5.
Figure 7 is a particular of a charging station of fig. 4.
Figures 8-8a are partial perspective views of a particular of the arm of fig. 2-5.
Figure 9 is a lateral view of the arm of figure 6.
Figure 10 is an image of the electric vehicle charging station including the arm for supporting the charging cable according to the present invention, at rest.
Figure 11a is an image of a particular of the arm for supporting the charging cable of fig. 10, taken from below and sideways.
Figure 11b is an image of another particular of the arm for supporting the charging cable of fig. 10, taken from a corner between two sides of the charging station.
Figure 11c is an image of another particular of the arm for supporting the charging cable of fig. 10, taken from below and sideways.
Figure 12 is an image the particular of the arm for supporting the charging cable of fig. 11a, at a first angular distance from the charging station.
Figure 12b is an image of the particular of the arm for supporting the charging cable of fig. 11a, at a second angular distance from the charging station.
Figure 12c and 12d are images of the particular of the arm for supporting the charging cable of fig. 11a, at maximum angular distance from the charging station taken from below and sideways.
Figures 13a and 13b are images of a further particular of the hinge and pulley of the arm for supporting the charging cable of fig. 10, at a first angular distance and at a maximum angular distance from the charging station.
Figures 13c is an image of a particular of the spring and cable of the arm for supporting the charging cable of fig. 10.Figures 14a and 14b are images of a further particular of the pulley and the cable of the arm for supporting the charging cable of fig. 10.
Figure 15a and 15b are, respectively, a perspective and a lateral view of a stopper of the arm for supporting the charging cable of fig. 10.

### Detailed description of an embodiment of the invention

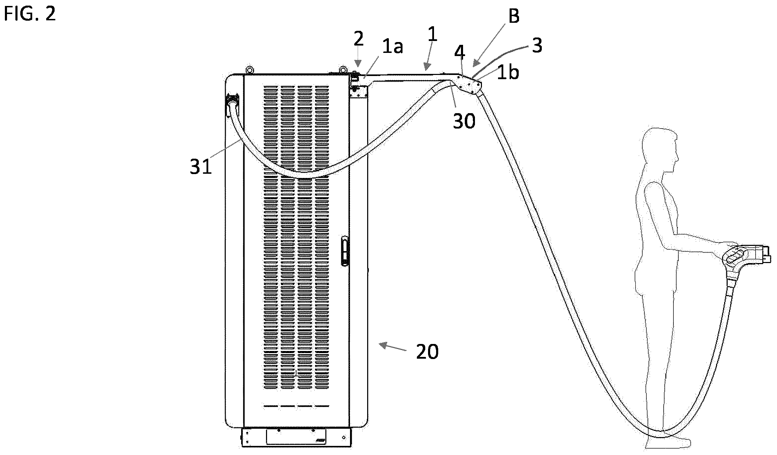

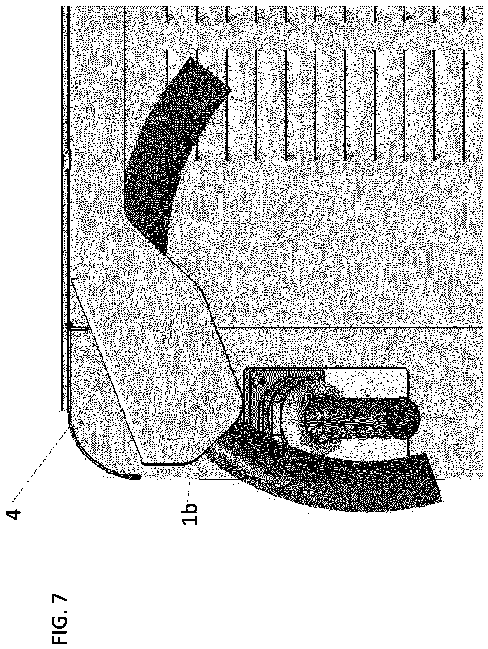

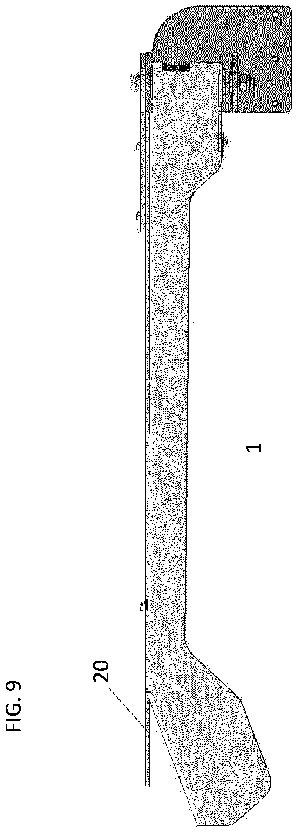

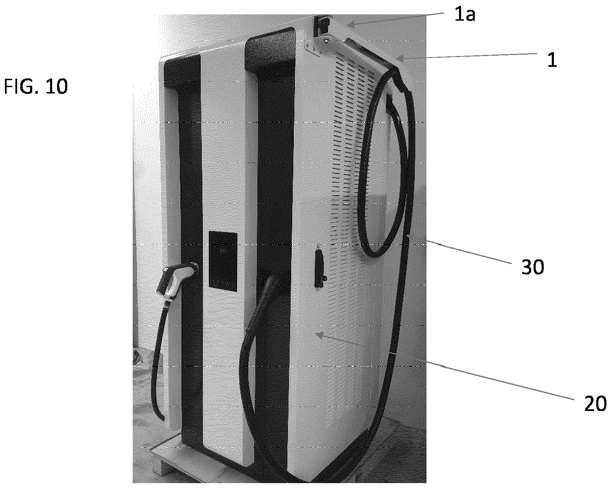

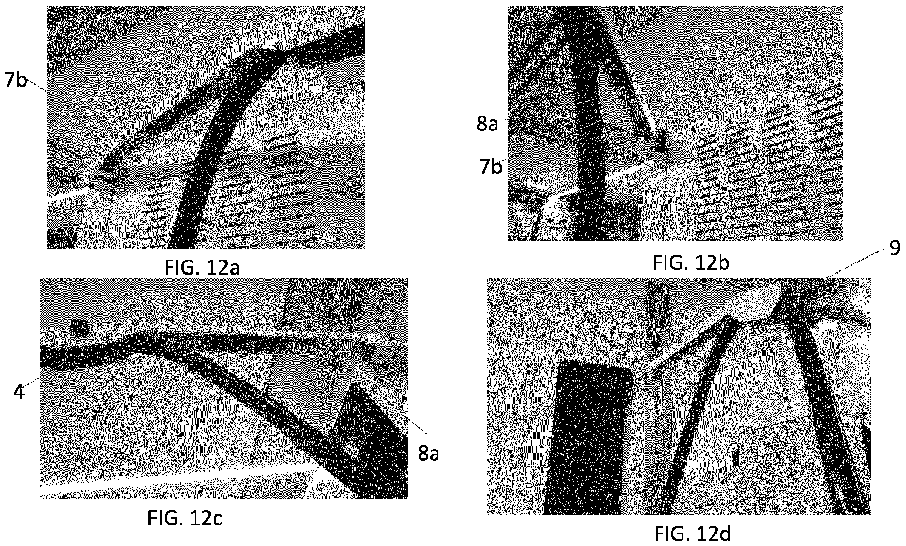

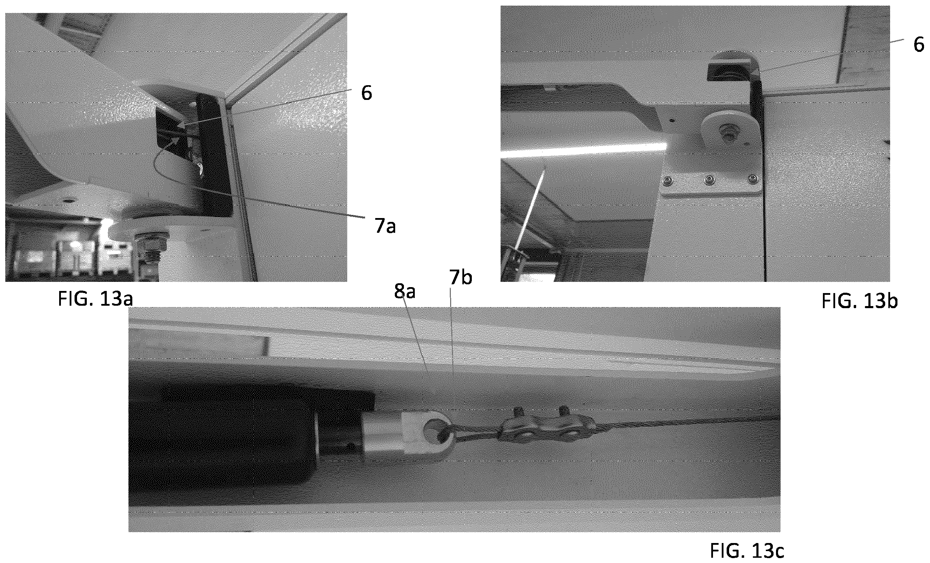

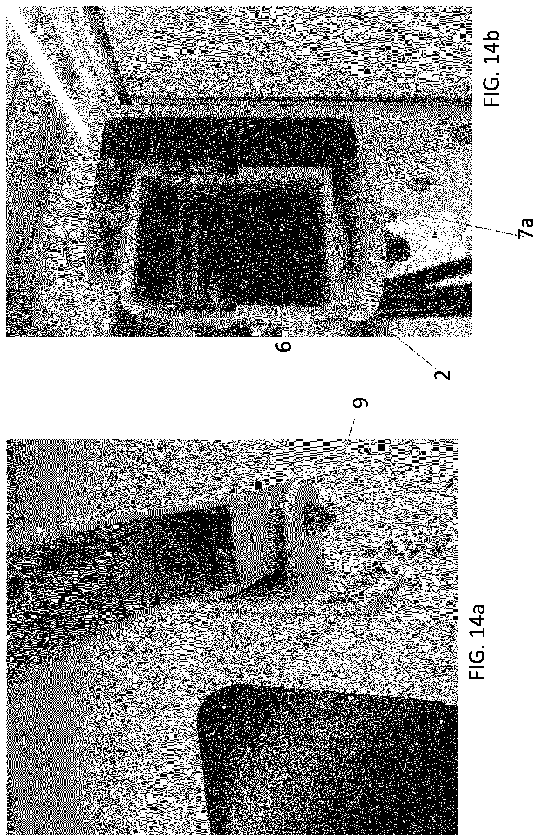

With reference to figures 2-15, an arm for supporting a charging cable 31 of an electric vehicle charging station 20 is schematically represented and indicated with reference number 1.

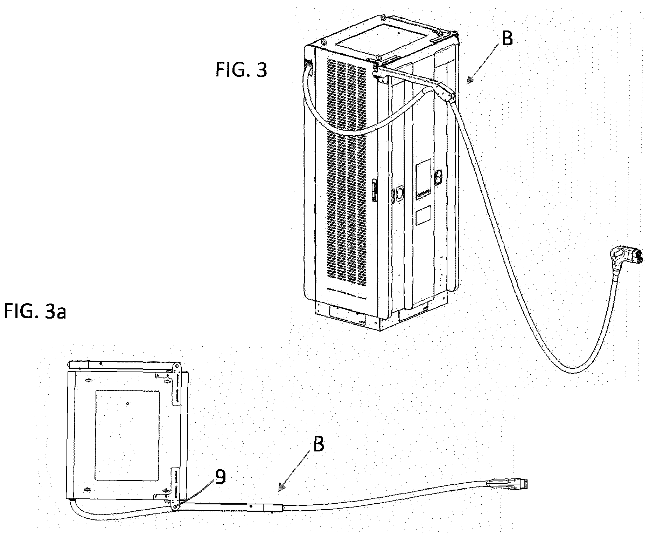

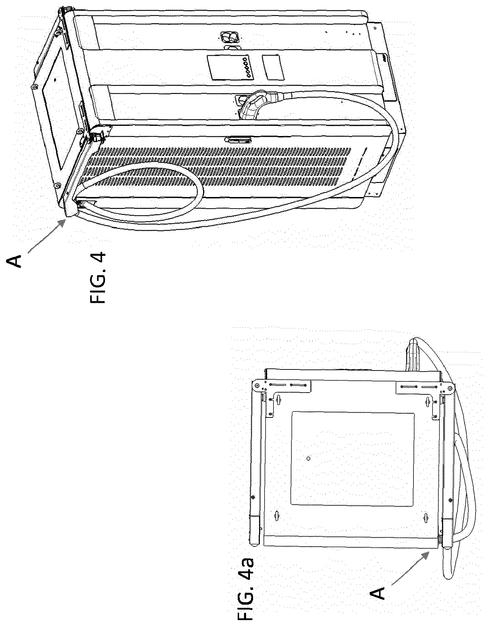

The arm 1 is suitable to hold at least in part the weight of the charging cable 31, during use, when a user has to move the cable 31 from a position A close to the charging station 20 (figure 4, 4a) to a position B distanced from the charging station 20 (such as in fig. 2, 3, 3a). In particular, a portion 30 of the charging cable 31 is supported by a portion 4 of the arm 1.

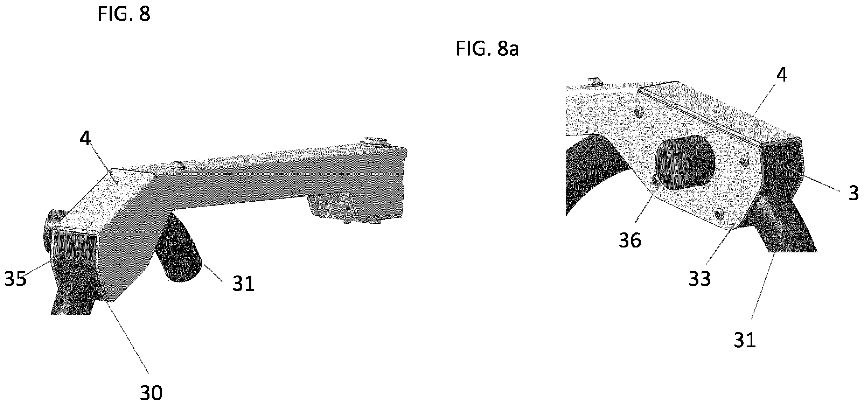

In figure 2, the portion 4 of the arm 1 supporting the charging cable 31 is at a second end 1b of the arm 1. The portion 4 is represented in more detail in figure 8 and 8a. The portion 4 is for instance a metallic casing 33 inside which supporting means 3, for instance two plastic or metallic flanges 35 are arranged. The portion 30 of the charging cable 31 is tightened between the flanges 35. The metallic casing 33 is threaded and a fastening mean 36 is screwed up on the thread of metallic casing 33 to tighten one flange on the other inside the casing 33, with the charging cable portion 30 blocked therebetween. The fastening means 36 and the threaded portion are not mandatory however magnetic means 36 are preferably arranged on the portion 4 for coupling with a magnetic surface of the charging station, and blocking the arm at the charging station. In one embodiment, the fastening means includes the magnetic means.

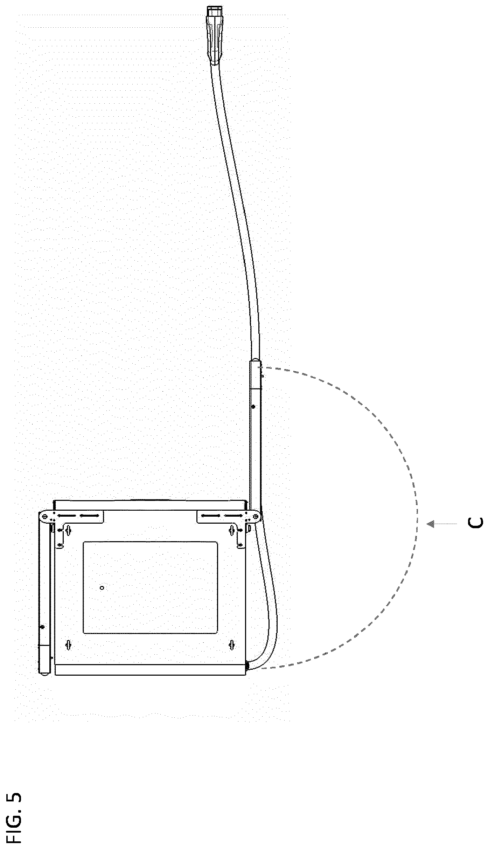

Coupling means 2 are arranged between the arm 1 and the charging station so as the portion 4 of the arm 1 (in particular the portion 4 thereof) is movable between a position A close to the charging station 20 and a position B distanced therefrom. In particular, the arm 1 has a first end 1a attached to the charging station 20 by the coupling means 2, for instance a hinge, and is rotatable on an axis, the axis of the hinge. No articulated joints are arranged between the first end 1a and the second end 1b, meaning that the arm 1 has only one degree of freedom. In the embodiment of the figures, the second end 1b (the portion 4) of the arm 1 is movable along a circular path C (fig. 5), between the position A where the second end 1b is close to the charging station, in contact with it, and the position B distanced from the charging station, at a maximum angular distance of 180° from position A.

Another arm 1 is coupled on a counter-posed side of the charging station and is movable in a same range of 180°.

The arm 1 includes a recall mechanism for recalling the arm 1 from a position distanced from the charging station, position B, to the closed position A.

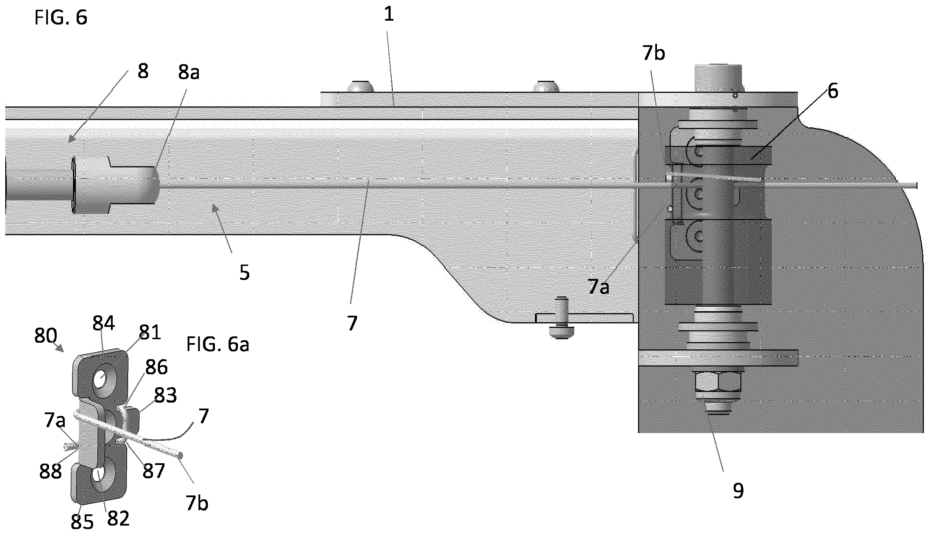

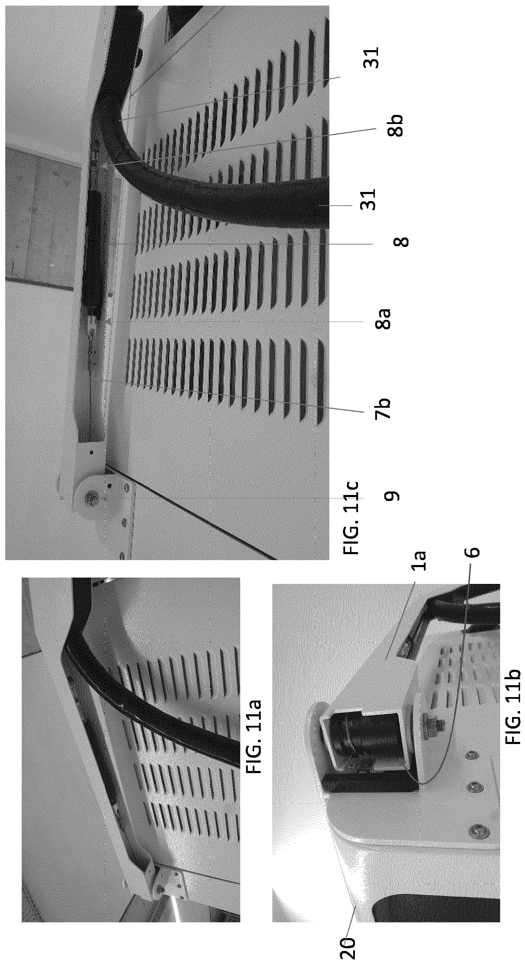

According to the present invention, the first end 1a is adapted to be hinged at the charging station 20 together with a pulley 6, which is for instance represented in figure 6 and shown in figure 11b.

The arm 1 includes spring means 5 implementing the recall mechanism. Figure 6 represent details of the spring means 5. In particular, a spring 8 is arranged between the first end 1a and the second end 1b of the arm 1. A cable 7 is wound around the pulley 6. The cable 7 may be a rope or a steel cable. The cable 7 is adapted to be fixed at a first end 7a to the charging station 20. The cable is also fixed at a second end 7b to an end 8a of the spring 8, in particular to the end of the spring which is arranged towards the first end 1a of the arm 1. The spring is movable linearly along a direction corresponding to an extension direction of the arm. Such a direction is the direction between the first end 1a and the second end 1b of the arm 1. The direction is also parallel to one side surface of the charging station. The direction is perpendicular to an axis of rotation of the hinge, where the pulley 6 and the first end 1a of the arm 1 are engaged. The direction of the axis is perpendicular to ground.

Attachment of the first end 7a of the cable 7 to the charging station 20 is made by means of a plate 80 which is represented in figure 6a. The plate 80 includes at least one hole 81, 82 for fixing the plate, for instant screwing it, to the charging station. The plate 80 includes a protrusion profile 83 arranged between a top and a bottom portion 84, 85 of the plate 80, preferably the portions 84, 85 in which the holes 81, 82 are made. Two passages 86 and 87 are arranged between the protrusion profile 83 and the portion 84, 85, i.e. a bottom passage 87 and a top passage 86. A redirection plate 88 is arranged at a predetermined angular distance from a plain where the protrusion profile 83 lays, preferably at 90°, on an opposite side of the plate 80 with respect to a size where the protrusion profile 83 is arranged. The plate 80 is attached to the charging station 20. The first end 7a of the cable 7 remains on a back surface of the plate 80, between the charging station and the back surface. The cable 7 pass from the back surface of the plate 80 through the bottom passage 87, then to the front surface of the plate 80, on the protrusion plate 83, then through the top passage 85 and again on the back surface of the plate 80, between the charging station and the back surface, to subsequently follow the direction set by the redirection plate 88. The redirection plate redirects the cable 7 to the pulley 6. The cable 7 is wound a plurality of times around the pulley 6 and then continues in the direction of the arm 1 which is the working direction of the spring 8, where it is attached by means of the second end 7b of the cable 7 to the spring end 8a. The working direction of the spring is preferably perpendicular to the direction of the redirection plate 88. Elements indicated above with reference number 80-88 are preferably made in one bend sheet metal part.

During use, the spring 8 is loaded and the cable 7 unwounded from the pulley 6, which is made by moving the portion 4 of the arm 1 towards the position B distanced from the charging cable, when the user moves the cable 7 for plugging its port to the electric vehicle. The cable 7 is wounded by leaving the spring 8 to unload. The arm is recalled back to the charging station by the spring.

Preferably, the spring 8 is a gas spring which is enclosed in a protective casing of the arm. The protective casing more preferably also encloses the cable 7 and the pulley so as all the components for driving the arm (between position A and position B) are embedded in the casing. More preferably, the casing includes a removable closure. According to an embodiment, the casing is opened at the bottom; alco according to this embodiment, the cable 7, the pulley 6 and the gas spring 8 are sheltered inside the casing.

The end 8a of the spring 8 arranged towards the first end 1a of the arm 1 is the head of a piston of the spring gas. The piston moves inside the casing so has it is protected inside the arm. A second end 8b of the gas spring 8 is fixed at the second end 1b of the arm 1. No means are required to adjust the force or the speed with which the gas spring is unloaded, since characteristics of the gas spring in the casing are not altered by climate condition or dust.

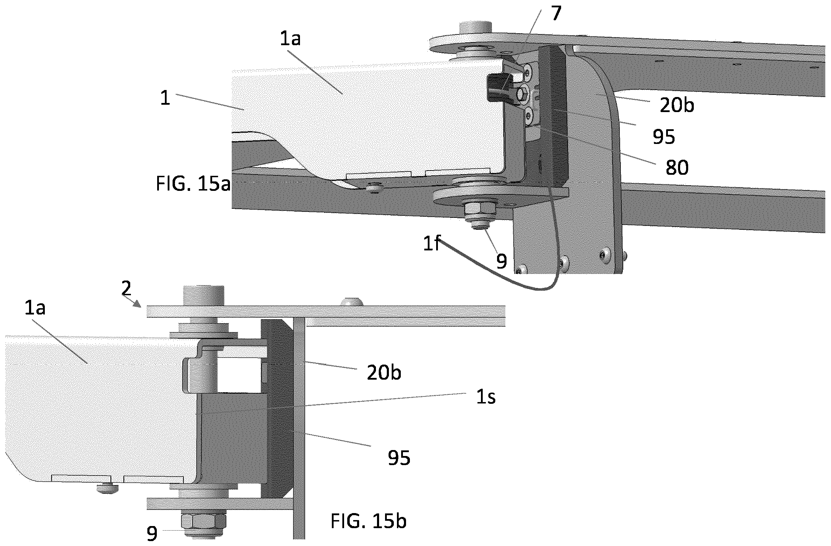

Preferably, a stopper 95 (fig. 15a and 15b) is arranged between the body 20b of the electric vehicle charging station and the arm 1a, to prevent the arm 1a from directly hitting the charger body 20b. More preferably, the stopper 95 is a plastic body. The stopper is arranged to be contacted by the arm 1a both when the arm 1a is at rest, i.e. close to the charging station, and when the arm 1a is at a maximum angular distance from the charging station 20. As schematically represented in figures 15a and 15b, indeed, in both positions, a side surface Is or a front surface 1f of the arm 1a enters in contact with the stopper.

## Claims

1. Arm (1) for an electric vehicle charging station (20) including
- coupling means (2) for coupling the arm (1) to the charging station (20);
- supporting means (3) for supporting part (30) of a charging cable (31) on a portion (4) of the arm (1), wherein the coupling means (2) are arranged so as the portion (4) of the arm (1) is movable between a position (A) close to the charging station (20) and a position (B) distanced therefrom;
- spring means (5) adapted for recalling the arm (1) from the position (B) distanced to the position (A) close to the charging station (20);
**characterized by** the fact that
- a first end (1a) of the arm (1) is adapted to be hinged at the charging station (20) together with a pulley (6);
- the spring means (5) include a spring (8) arranged between the first end (1a) and a second end (1b) of the arm (1), and a cable (7) wound around the pulley (6), the cable (7) being adapted to be fixed, at a first end (7a), to the charging station (20), and at a second end (7b), to an end (8a) of the spring (8) arranged towards the first end (1a) of the arm; wherein, during use, the spring (8) is loaded and the cable (7) is unwounded from the pulley (6) moving the portion (4) of the arm (1) towards the position (B) distanced, and the cable (7) is wounded by leaving the spring (8) to unload.

2. Arm (1) according to claim 1, wherein the spring (8) is a gas spring and the end (8a) of the spring (8) arranged towards the first end (1a) of the arm (1) is the head of a piston of the spring gas.

3. Arm (1) according to claim 2 wherein a second end (8b) of the gas spring (8) is fixed at the second end (1b) of the arm (1).

4. Arm (1) according to claim 1 wherein the coupling means (2) includes a pivot (9) adapted to be hinged at a plate on the charging station (20) and at a plate of the first end (1a) of the arm (1), wherein the portion (4) of the arm (1) in use moves on a circular path (C) having center at the pivot (9).

5. Arm (1) according to claim 1 wherein the cable (7) is a rope or a steel cable.

6. Arm (1) according to claim 1 including a plate (80) comprising a protrusion profile (83) arranged between a top and a bottom portion (84, 85) of the plate (80), wherein two passages (86, 87) are arranged between the protrusion profile (83) and the top and bottom portions (84, 85) of the plate (80), and the plate (80) further comprises a redirection plate (88) arranged at a predetermined angular distance from a plane where the protrusion profile (83) is laid on, preferably at 90°, on an opposite side of the plate (80) with respect to a size where the protrusion profile (83) is arranged, wherein the cable (7) pass through the two passages (86, 87) and is redirected by the redirection profile (88) towards the pulley (6).

7. Arm (1) according to claim 6, wherein the top and bottom portion (84, 85) of the plate includes holes (81, 82) for screwing the plate (80) to the charging station (20), so as the first end (7a) of the cable (7) remains on a back surface of the plate (80), between the charging station (20) and the back surface.

8. Arm (1) according to claim 7 wherein the cable (7) pass from the back surface of the plate (80) through the bottom passage (87), then to the front surface of the plate (80), on the protrusion plate (83), then through the top passage (85) and then again on the back surface of the plate (80), between the charging station (20) and the back surface, and subsequently follow the direction set by the redirection plate (88).

9. Arm (1) according to claim 8, wherein the redirection plate (88) redirects the cable (7) to the pulley (6), the cable (7) is wound a plurality of times around the pulley (6) and then continues in the direction of the arm (1) which is a working direction of the spring (8).

10. Charging station (20) including an arm (1) according to any one of claims 1 to 9.
